# DEMANDE DE BREVET EUROPEEN

(11) **EP 2 269 829 A1**
(43) Date de publication de la demande: **05.01.2011**
(21) Numéro de dépôt: 10167757.3
(22) Date de dépôt: 29.06.2010
(51) Int. Cl.: B41J 3/50, H04N 1/00, H04N 1/32, G06F 21/00

(54) **Procédé d'impression et procédé de sécurisation d'accès à un document imprimé par ce procédé**

(30) Priorité: 30.06.2009 FR 0903176
(71) Demandeur: SAGEMCOM DOCUMENTS SAS, 92500 Rueil Malmaison (FR)
(72) Inventeur: Sabatier, Pierre, 92500, RUEIL-MALMAISON (FR)
(74) Mandataire: Lavialle, Bruno François Stéphane

(57) **Abrégé**

Procédé d'impression, comprenant les étapes de :
- imprimer un document sur au moins une feuille comportant un circuit RFID,
- et inscrire dans le circuit RFID au moins une information relative au document, l'information est un identifiant d'un fichier contenu dans un serveur (100) exécutant un logiciel de gestion électronique de documents.

## Description

La présente invention concerne un procédé d'impression et un procédé de sécurisation de l'accès à des documents imprimés.

### ARRIERE PLAN DE L'INVENTION

L'un des modes d'utilisation les plus courants des fichiers électroniques reste d'imprimer ses documents afin de permettre leur lecture, leur échange, leur signature... Un inconvénient est que les documents ainsi imprimés peuvent facilement être soustraits aux personnes normalement autorisées ou être sortis des lieux d'utilisation normale de ces documents.

### OBJET DE L'INVENTION

Un but de l'invention est de fournir un moyen permettant d'assurer un contrôle sur les documents imprimés afin d'assurer une relative sécurisation de leur utilisation.

### RESUME DE L'INVENTION

A cet effet, on prévoit, selon l'invention, un procédé d'impression, comprenant les étapes de :
- imprimer un document sur au moins une feuille comportant un circuit RFID,
- et inscrire dans le circuit RFID au moins une information relative au document.

Ainsi, une feuille incorporant un circuit RFID (de l'anglais « Radio Frequency Identification » ou identification par fréquence radio) va être utilisée comme page du document. Le circuit RFID peut contenir une information relative au document et par exemple une référence permettant de retrouver un fichier contenant des droits d'accès au document, le nom des utilisateurs autorisés du document, l'identification d'une zone géographique des utilisateurs autorisés du document, l'identification d'une zone géographique dans laquelle le document doit être maintenu, une caractéristique du document comme le nombre de pages le type d'impression... Le circuit RFID permet ainsi d'associer au document une information non visible et détectable à distance aux fins d'identifier le document, de le localiser, ou d'empêcher sa reproduction. La page incorporant le circuit RFID peut être choisie de manière aléatoire, constituer la page de garde du document, ou la page des signatures lorsque le document est signé... De préférence, une seule feuille équipée d'un circuit RFID est introduite dans le document pour des raisons de coût.

L'invention concerne également, un procédé de sécurisation d'accès à un document imprimé appliqué à un bâtiment dans lequel est définie une zone de sécurité recevant un dispositif d'impression avec lecture/écriture de circuit RFID, la zone étant associée à au moins un point de passage permettant au moins une sortie de la zone, le procédé comprenant l'étape de détecter et lire un circuit RFID présent dans le point de passage et l'étape de communiquer l'information contenue dans le circuit RFID à un serveur contenant les droits d'accès au document imprimé incorporant un circuit RFID.

D'autres caractéristiques et avantages de l'invention ressortiront de la lecture de la description qui suit d'un mode de réalisation particulier non limitatif de l'invention.

### BREVE DESCRIPTION DES DESSINS

Il sera fait référence aux dessins annexés, parmi lesquels :

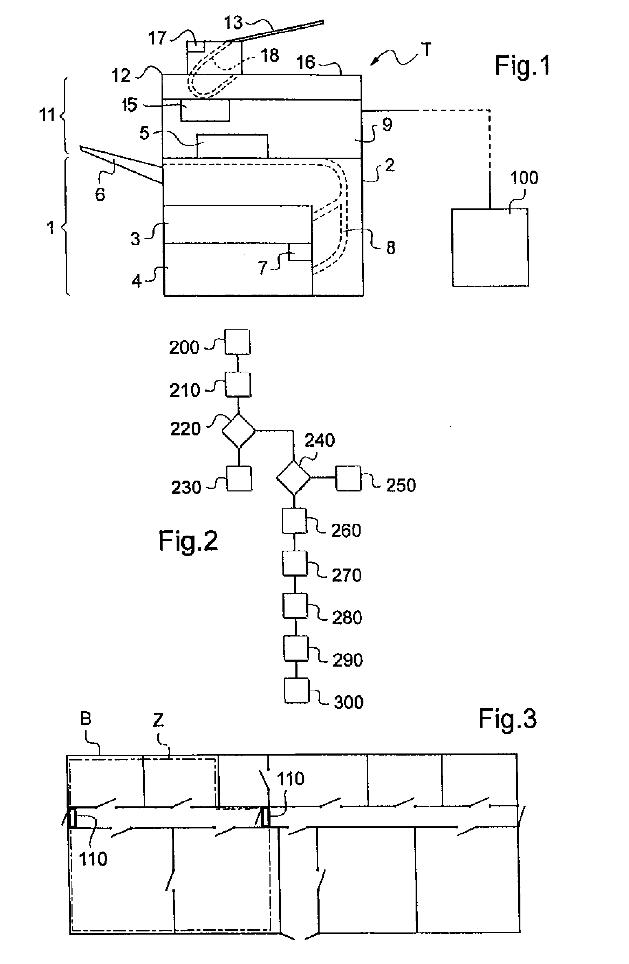

- la figure 1 est une vue schématique d'un système conforme à l'invention,
- la figure 2 est un schéma par bloc illustrant un mode de mise en oeuvre du procédé d'impression conforme à l'invention,
- la figure 3 est une vue en coupe, de dessus, d'un bâtiment pourvu d'une zone sécurisée.

### DESCRIPTION DETAILLEE DE L'INVENTION

En référence aux figures, le système conforme à l'invention comprend un terminal multifonction T pourvu d'un dispositif d'impression, généralement désigné en 1, comprenant un châssis 2 équipé d'un bac principal d'entrée 3, un bac additionnel d'entrée 4, une unité d'impression 5 et un bac de sortie 6.

Le bac principal d'entrée 3 est destiné à recevoir des feuilles classiques à imprimer.

Le bac additionnel d'entrée 4 est destiné à recevoir des feuilles à imprimer équipées d'un circuit RFID et comprend au niveau de sa sortie un module de lecture/écriture 7 de circuit RFID.

Des moyens de transport de feuilles symbolisés en 8 sont agencés dans le châssis 2 et comprennent un chemin s'étendant depuis les bacs d'entrée 3, 4 jusqu'au bac de sortie 6 en passant par l'unité d'impression 5 et des galets motorisés entraînant les feuilles depuis les bacs d'entrée 3, 4 et tout le long du chemin jusqu'au bac de sortie 6.

Le terminal multifonction T comprend en outre un dispositif de numérisation, généralement désigné en 11, comprenant un châssis 12 surmontant le châssis 2, un bac d'entrée 13 des feuilles à numériser, une unité de numérisation 15 et un bac de sortie 16 des feuilles numérisées.

Un module de lecture 17 de circuit RFID est monté au voisinage du bac d'entrée 13.

Des moyens de transport de feuilles symbolisés en 18 sont agencés dans le châssis 12 et comprennent un chemin s'étendant depuis le bac d'entrée 13 jusqu'au bac de sortie 16 en passant par l'unité de numérisation 15 et des galets motorisés entraînant les feuilles depuis le bac d'entrée 13 et tout le long du chemin jusqu'au bac de sortie 16.

L'unité d'impression 5, le module de lecture/écriture 7, les galets motorisés des moyens de transport 8, l'unité de numérisation 15, le module de lecture 17, les galets motorisés des moyens de transport 18 sont reliée à une unité de commande 9. L'unité de commande 9 incorpore de façon connue en elle-même au moins un processeur et des mémoires morte et vive lui permettant d'exécuter un programme de pilotage du terminal T assurant des fonctions d'impression, de numérisation, de copie, de télécopie, d'émission de courriels... Le programme de pilotage est au surplus agencé ici pour réaliser une sécurisation de l'impression et de la numérisation des documents par la mise en oeuvre des procédés de l'invention qui seront exposés ci-après.

L'unité de commande 9 est pourvue des moyens de son raccordement à un serveur distant 100, par exemple par une liaison de type ETHERNET via un réseau auquel peuvent être reliés d'autres ordinateurs. Le serveur 100, qui ne fait pas partie du terminal à proprement parler, est une unité informatique agencée de manière connue en elle-même pour assurer une gestion électronique des documents. Le serveur 100 contient des documents et des fichiers associés répertoriant les droits d'accès au document.

Le terminal multifonction T et le serveur 100 sont ici disposés dans un bâtiment généralement désigné en B et dans lequel a été ménagée une zone sécurisée S accessible via des passages P pourvues de portiques 110 incorporant des modules de lecture de circuit RFID. Les modules de lecture sont reliés au serveur 100 et ont une sensibilité suffisante pour détecter et lire un circuit RFID qui passerait dans le portique 110.

Lorsqu'une demande d'impression d'un document parvient à l'unité de commande 9, en provenance du serveur 100 ou d'un autre ordinateur du réseau, l'unité de commande vérifie s'il s'agit d'une impression classique ou sécurisée.

Dans le premier cas, l'impression est lancée de manière habituelle sur des feuilles standard.

Dans le deuxième cas, il est nécessaire de récupérer une information devant être introduite dans un circuit RFID d'une feuille qui sera utilisée comme page du document.

Le procédé d'impression conforme à l'invention comprend ainsi les étapes de :
- recevoir la demande d'impression (étape 200),
- effectuer une requête auprès du serveur 100 pour récupérer les droits d'accès au document (étape 210),
- vérifier si le document doit être sécurisé (étape 220),
- si non, imprimer le document de manière classique (étape 230),
- si oui, vérifier par le module de lecture/écriture 7 est qu'une feuille pourvue d'un circuit RFID est présente dans le bac additionnel d'entrée 4 (étape 240),
- en l'absence d'une telle feuille, émettre un message d'erreur et interrompre le processus d'impression (étape 250),
- en présence d'une telle feuille, déterminer de manière aléatoire la page qui sera imprimée sur ladite feuille (étape 260),
- imprimer les pages du document sur du papier classique (feuilles issues du bac principal 3) jusqu'à la page déterminée (étape 270),
- écrire l'identifiant du fichier des droits d'accès (étape 280) dans le circuit RFID de la feuille (issue du bac additionnel d'entrée 4) sur laquelle la page déterminée va être imprimée et imprimer la page déterminée du document sur ladite feuille (étape 290),
- imprimer les pages restantes du document sur du papier classique (feuilles issues du bac principal 3) jusqu'à la page déterminée (étape 300).

Dans la zone sécurisée Z, on prévoit que tous les terminaux multifonction et/ou de numérisation seule soient pourvus d'un module de lecture de circuit RFID.

Il est ainsi possible de mettre en oeuvre le procédé de sécurisation de l'invention, qui comprend l'étape de détecter et lire un circuit RFID présent dans le passage P grâce au portique 110 et l'étape de communiquer l'information contenue dans le circuit RFID au serveur 100 contenant les droits d'accès au document imprimé incorporant un circuit RFID. Dans l'hypothèse où le document ne pourrait sortir de zone sécurisée Z, une alarme peut être demandée. Si le portique comprend en outre un organe d'identification des utilisateurs par exemple au moyen d'un badge permettant l'ouverture d'une porte, il est possible de vérifier dans le fichier des droits d'accès que l'utilisateur ayant présenté son badge et portant le document sécurisé est bien autorisé à détenir celui-ci.

Dans la zone sécurisée, le procédé de sécurisation de l'invention prévoit de détecter avant toute numérisation d'un document la présence d'un circuit RFID dans ledit document et, en cas d'impression ultérieure du document numérisé, l'étape d'introduire dans le document nouvellement imprimé une feuille pourvue d'un circuit RFID contenant l'information lue dans le circuit RFID du document original (lorsque l'appareil utilisé est un terminal multifonction).

Dans la zone sécurisée, le procédé de sécurisation de l'invention prévoit en variante de détecter avant toute numérisation la présence d'un circuit RFID dans le document à numériser et, en présence d'un tel circuit, refuser la numérisation. On évite ainsi une sortie du document sous forme papier mais aussi sous forme électronique.

Lorsque la zone sécurisée est pourvue d'une pluralité de lecteurs de circuits RFID, par exemple à chaque entrée d'une pièce, le procédé comprend une étape de localisation d'un document pourvu d'un circuit RFID. Le serveur 100 est alors utilisé pour tracer les déplacements du document.

Bien entendu, l'invention n'est pas limitée au mode de réalisation décrit mais englobe toute variante entrant dans le cadre de l'invention telle que définie par les revendications.

En particulier, l'invention est applicable à des terminaux autonomes (contenant les fichiers de droits d'accès) ou reliés en réseau, pourvus ou pas d'un dispositif de numérisation, comportant plus de deux bacs d'entrée ou plus de deux bacs de sortie...

En variante, l'unité de commande peut être programmée pour, à partir de l'information constituée par un identifiant d'un fichier contenant les droits d'accès au document, aller rechercher sur le serveur ledit fichier et copier les droits d'accès en question directement dans le circuit RFID du document qui sera imprimé.

Il est possible de prévoir que l'information inscrite dans le circuit RFID soit saisie par un opérateur sur son ordinateur lors de la demande d'impression ou directement sur un clavier du terminal.

On peut prévoir des zones sécurisées concentriques ou adjacentes les unes aux autres en fonction du niveau de sécurité requis : les documents très sensibles devant rester dans une de ces zones alors que des documents moins sensibles peuvent aller dans une autre zone sécurisée.

## Revendications

1. Procédé d'impression, comprenant les étapes de :
- imprimer un document sur au moins une feuille comportant un circuit RFID,
- et inscrire dans le circuit RFID au moins une information relative au document, l'information est un identifiant d'un fichier contenu dans un serveur (100) exécutant un logiciel de gestion électronique de documents.

2. Procédé selon la revendication 1, dans lequel l'identifiant permet d'accéder à un fichier contenant les droits d'accès au document.

3. Procédé de sécurisation d'accès à un document imprimé avec le procédé de la revendication 1, appliqué à un bâtiment (B) dans lequel est définie une zone de sécurité (2) recevant un dispositif d'impression avec lecture/écriture de circuit RFID, la zone étant associée à au moins un point de passage permettant au moins une sortie de la zone, le procédé comprenant l'étape de détecter et lire un circuit RFID présent dans le point de passage et l'étape de communiquer l'information contenue dans le circuit RFID à un serveur contenant les droits d'accès au document imprimé incorporant un circuit RFID.

4. Procédé selon la revendication 3, comprenant l'étape de, dans la zone sécurisée (2), détecter avant toute numérisation d'un document la présence d'un circuit RFID dans ledit document et, en cas d'impression ultérieure du document numérisé, l'étape d'introduire dans le document nouvellement imprimé une feuille pourvue d'un circuit RFID contenant l'information lue dans le circuit RFID du document original.

5. Procédé selon la revendication 3, comprenant l'étape de, dans la zone sécurisée (2), détecter avant toute numérisation la présence d'un circuit RFID dans le document à numériser et, en présence d'un tel circuit, refuser la numérisation.

6. Procédé selon la revendication 3, la zone sécurisée étant pourvue d'une pluralité de lecteurs de circuits RFID (110), le procédé comprend une étape de localisation d'un document pourvu d'un circuit RFID dans la zone sécurisée.
